# EUROPEAN PATENT APPLICATION

(11) **EP 2 271 168 A1**
(43) Date of publication of application: **05.01.2011**
(21) Application number: 10184515.4
(22) Date of filing: 20.11.2007
(51) Int. Cl.: H04W 76/06, H04W 76/04

(54) **Method and system for a signaling connection release indication**

(30) Priority: 20.08.2007 US 956785 P
(62) Divisional of application: 07121138.7
(71) Applicant: RESEARCH IN MOTION LIMITED, Waterloo, Ontario N2L 3W8 (CA)
(72) Inventor: Islam, Muhammad Khaledul, Waterloo Ontario N2L 3W8 (CA); Wirtanen, Jeffrey William, Waterloo Ontario N2L 3W8 (CA); Young, Gordan, Waterloo Ontario N2L 3W8 (CA)
(74) Representative: Roberts, Gwilym Vaughan

(57) **Abstract**

A method and system for processing a signaling connection release indication between user equipment and a wireless network, the method comprising the steps of: monitoring, at the user equipment, whether a signaling connection release indication should be sent to the wireless network; appending, at the user equipment, a cause for the signaling connection release indication to the signaling connection release indication; sending the appended signaling connection release indication to the wireless network; receiving the signaling connection release indication at the wireless network; and filtering said cause to determine whether to raise an alarm.

## Description

### FIELD OF THE APPLICATION

The present application relates to radio resource control in a wireless network, and in particular to the release of an existing signaling connection between User Equipment (UE) and a wireless network such as, for example, a Universal Mobile Telecommunication System (UMTS) network.

### BACKGROUND

A Universal Mobile Telecommunication System (UMTS) is a broadband, packet based system for the transmission of text, digitized voice, video and multimedia. It is a highly subscribed to standard for third generation and is generally based on Wideband Coded Division Multiple Access (W-CDMA).

In a UMTS network, a Radio Resource Control (RRC) part of the protocol stack is responsible for the assignment, configuration and release of radio resources between the UE and the UTRAN. This RRC protocol is described in detail in the 3GPP TS 25.331 specifications. Two basic modes that the UE can be in are defined as "idle mode" and "UTRA connected mode". UTRA stands for UMTS Terrestrial Radio Access. In idle mode, the UE is required to request a RRC connection whenever it wants to send any user data or in response to a page whenever the UTRAN or the Serving GPRS Support Node (SGSN) pages it to receive data from an external data network such as a push server. Idle and Connected mode behaviors are described in details in 3 GPP specifications TS 25.304 and TS 25.331.

When in a UTRA RRC connected mode, the device can be in one of four states. These are:
*CELL-DCH:* A dedicated channel is allocated to the UE in uplink and downlink in this state to exchange data. The UE must perform actions as outlined in 3GPP 25.331.
*CELL_FACH*: no dedicated channel is allocated to the user equipment in this state. Instead, common channels are used to exchange a small amount of bursty data. The UE must perform actions as outlined in 3GPP 25.331 which includes the cell selection process as defined in 3GPP TS 25.304.
*CELL_PCH*: the UE uses Discontinuous Reception (DRX) to monitor broadcast messages and pages via a Paging Indicator Channel (PICH). No uplink activity is possible. The UE must perform actions as outlined in 3GPP 25.331 which includes the cell selection process as defined in 3GPP TS 25.304. The UE must perform the CELL UPDATE procedure after cell reselection.
*URA_PCH*: the UE uses Discontinuous Reception (DRX) to monitor broadcast messages and pages via a Paging Indicator Channel (PICH). No uplink activity is possible. The UE must perform actions as outlined in 3GPP 25.331 including the cell selection process as defined in 3GPP TS 25.304. This state is similar to CELL_PCH, except that URA UPDATE procedure is only triggered via UTRAN Registration Area (URA) reselection.

The transition from an idle to the connected mode and vise-versa is controlled by the UTRAN. When an idle mode UE requests an RRC connection, the network decides whether to move the UE to the CELL_DCH or CELL_FACH state. When the UE is in an RRC connected mode, again it is the network that decides when to release the RRC connection. The network may also move the UE from one RRC state to another prior to releasing the connection or in some cases instead of releasing the connection. The state transitions are typically triggered by data activity or inactivity between the UE and network. Since the network may not know when the UE has completed data exchange for a given application, it typically keeps the RRC connection for some time in anticipation of more data to/from the UE. This is typically done to reduce the latency of call set-up and subsequent radio bearer setup. The RRC connection release message can only be sent by the UTRAN. This message releases the signal link connection and all radio bearers between the UE and the UTRAN.

The problem with the above is that even if an application on the UE has completed its data transaction and is not expecting any further data exchange, it still waits for the network to move it to the correct state. The network may not be even aware of the fact that the application on the UE has completed its data exchange. For example, an application on the UE may use its own acknowledgement-based protocol to exchange data with its application server which is connected to the UMTS core network. Examples are applications that run over UDP/IP implementing their own guaranteed delivery. In such a case, the UE knows whether the application server has sent or received all the data packets or not and is in a better position to determine if any further data exchange is to take place and hence decide when to terminate the RRC connection associated with Packet Service (PS) domain. Since the UTRAN controls when the RRC connected state is changed to a different state or into an idle mode, and the fact that UTRAN is not aware of the status of data delivery between the UE and external server, the UE is forced to stay in a higher data rate and intensive battery state than the required state or mode, thereby draining battery life. This also results in wasting network resources due to the fact the radio bearer resources are unnecessarily kept occupied.

One solution to the above is to have the UE send a signaling release indication to the UTRAN when the UE realizes that it is finished with data transaction. Pursuant to section 8.1.14.3 of the 3GPP TS 25.331 specification, the UTRAN may release the signaling connection upon receipt of the signaling release indication from the UE, causing the UE to transition to an idle mode. A problem with the above is that the signaling release indication may be considered an alarm. A network typically only expects the signaling release indication when a GMM service request failure, a RAU failure, or a attach failure occur. The raising of an alarm when the UE request signaling release results in inefficient performance monitoring and alarm monitoring at the network.

### BRIEF DESCRIPTION OF THE DRAWINGS

The present application will be better understood with reference to the drawings in which:
**Figure 1** is a block diagram showing RRC states and transitions;
**Figure 2** is a schematic of a UMTS network showing various UMTS cells and a URA;
**Figure 3** is a block diagram showing the various stages in an RRC connection setup;
**Figure 4A** is a block diagram of an exemplary transition between a CELL_DCH connected mode state and an idle mode initiated by the UTRAN according to current method;
**Figure 4B** is a block diagram showing an exemplary transition between a CELL_DCH state connected mode transition to an idle mode utilizing signaling release indications;
**Figure 5A** is a block diagram of an exemplary transition between a CELL_DCH inactivity to a CELL_FACH inactivity to an idle mode initiated by the UTRAN;
**Figure 5B** is a block diagram of an exemplary transition between CELL_PCH inactivity and an idle mode utilizing signaling release indications;
**Figure 6** is a block diagram of a UMTS protocol stack;
**Figure 7** is an exemplary UE that can be used in association with the present method;
**Figure 8** is an exemplary network for use in association with the present method and system;
**Figure 9** is a flow diagram showing the steps of adding a cause for a signaling connection release indication at the UE; and
**Figure 10** is a flow diagram showing the steps taken by a UE upon receipt of a signaling connection release indication having a cause.

### DETAILED DESCRIPTION

The examples and embodiments provided below describe various methods and systems to release an existing signaling connection between a mobile device or User Equipment (UE) and a wireless network such as, for example, a UMTS network. It is to be understood that other implementations in other types of networks are also possible. For example, the same teachings could also be applied to a Code-Division-Multiple-Access (CDMA) network (e.g. 3GPP2 IS-2000), Wideband-CDMA (W-CDMA) network (e.g. 3GPP UMTS / High-Speed Packet Access (HSPA)) network or by way of generalization, to any network based on radio access technologies that utilize network-controlled radio resources or that does not maintain any knowledge of the status of UE application level data exchanges. The specific examples and implementations described below although presented for simplicity in relation to UMTS networks are also applicable to these other network environments.

In some UMTS implementations, the present system and method provide for the transitioning from an RRC connected mode to a more battery efficient state or mode while ensuring the network does not consider a signaling release indication to be an alarm if the cause of the signaling release indication is a UE idle transition request. In particular, the present method and apparatus provide for transitioning based on either the UE initiating termination of a signaling connection for a specified core network domain or indicating to the UTRAN that a transition should occur from one connected state to another. As noted above, the following description shall be described with respect to the exemplary implementation of a UMTS. It should be understood, however, that the teachings of the present disclosure are analogously applicable to other radio communication systems.

In a UMTS network environment, if an application on the UE determines that it is done with the exchange of data, it can send a "done" indication to the "RRC connection manager" component of UE software. The RRC connection manager keeps track of all existing applications (including those providing a service over one or multiple protocols), associated Packet Data Protocol (PDP) contexts, associated packet switched (PS) radio bearers and associated circuit switched (CS) radio bearers. A PDP Context is a logical association between a UE and PDN (Public Data Network) running across a UMTS core network. One or multiple applications (e.g. an e-mail application and a browser application) on the UE may be associated with one PDP context. In some cases, one application on the UE is associated with one primary PDP context and multiple applications may be tied with secondary PDP contexts. The RRC Connection Manager receives "done" indications from different applications on the UE that are simultaneously active. For example, user may receive an e-mail from a push server while browsing the web. After the e-mail application has sent an acknowledgment, it may indicate that it has completed its data transaction, however, the browser application may not send such indication. Based on a composite status of such indications from active applications, UE software can decide how long it should wait before it can initiate a signaling connection release of the core network packet service domain. A delay in this case can be introduced to ensure that the application is truly finished with data exchange and does not require an RRC connection. The delay can be dynamic based on traffic history and/or application profiles. Whenever the RRC connection manager determines that with some probability that no application is expected to exchange any data, it can send a signaling connection release indication procedure for the appropriate domain (e.g. PS domain). Alternatively it can send a request for state transition within connected mode to the UTRAN.

The above decision may also take into account whether network supports URA_PCH state and the transition behavior to this state.

The UE initiated transition to idle mode can happen from any state of the RRC connected mode and ends up having the network release the RRC connection and moving to idle mode. The UE being in idle mode, as will be appreciated by those skilled in the art, is much less battery intensive than the UE being in a connected state.

The sending of the signaling release indication however can cause the network to consider that an alarm has occurred. In the case that the signaling release indication is a result of the RRC determining that no traffic is expected, in a preferred embodiment the network can distinguish the fact that the signaling release indication is a result of a requested idle transition as opposed to an abnormal condition. This distinction allows indicators such as the Key Performance Indicator (KPI) to be more accurate, thereby improving performance monitoring and alarm monitoring.

The present method allows the UE to append, to an existing signaling release indication, a field providing the cause for the signaling release indication. The network may then use the appended field to filter true alarm conditions from situations in which a UE has requested to be put into an idle state because it is expecting no further data. This improves the efficiency of alarm and performance monitoring, while still allowing the UE to save battery resources by moving into an idle mode more quickly.

The present application therefore provides a method for processing signaling release indication cause between user equipment and a wireless network, comprising the steps of: monitoring, at the user equipment, whether a signaling connection release indication should be sent to the wireless network; appending, at the user equipment, a cause for the signaling connection release indication to the signaling connection release indication; sending the appended signaling connection release indication to the wireless network; receiving the signaling connection release indication at the wireless network; and filtering said cause to determine whether to raise an alarm

The present application further provides a system adapted for processing signaling release indication cause, the system comprising: user equipment, the user equipment having a radio subsystem including a radio adapted to communicate with the UMTS network; a radio processor having a digital signal processor and adapted to interact with said radio subsystem; memory; a user interface; a processor adapted to run user applications and interact with the memory, the radio and the user interface and adapted to run applications, the user equipment characterized by having means for: monitoring whether a signaling connection release indication should be sent to the wireless network; appending a cause for the signaling connection release indication to the signaling connection release indication; and sending the appended signaling connection release indication to the wireless network; and a wireless network adapted to communicate with the user equipment and further characterized by means for: receiving the signaling connection release indication; and filtering said cause to determine whether to raise an alarm.

The present application still further provides a method for processing signaling release indication cause at user equipment for improved alarm tracking at a wireless network, comprising the steps of: monitoring whether a signaling connection release indication should be sent to the wireless network; appending a cause for the signaling connection release indication to the signaling connection release indication; and sending the appended signaling connection release indication to the wireless network, wherein said wireless network is provided with an indication of the cause of the signaling connection release indication.

The present application still further provides apparatus for user equipment to facilitate release of a signaling connection. A checker is configured to check whether a signaling connection release indication should be sent. A signaling connection release indication sender is configured to send a signaling connection release indication responsive to indication by the checker that the signaling connection release indication by the checker that the signaling connection release indication should be sent. The signaling connection release indication includes a signaling release indication cause field.

The present application still further provides network apparatus for operating upon a signaling connection release indication. An examiner is configured to examine a signaling release indication cause field of the signaling connection release indication. The examiner checks whether the signaling release indication cause field indicates an abnormal condition. An alarm generator is configured selectably to generate an alarm if examination by the examiner determines that the signaling release indication cause field indicates the abnormal condition.

The present application yet further provides a user equipment adapted for providing signaling release indication cause in a UMTS network, the user equipment having a radio subsystem including a radio adapted to communicate with the UMTS network; a radio processor having a digital signal processor and adapted to interact with said radio subsystem; memory; a user interface; a processor adapted to run user applications and interact with the memory, the radio and the user interface and adapted to run applications, the user equipment characterized by having means for: monitoring whether a signaling connection release indication should be sent to the wireless network; appending a cause for the signaling connection release indication to the signaling connection release indication; and sending the appended signaling connection release indication to the wireless network, wherein said wireless network is provided with an indication of the cause of the signaling connection release indication.

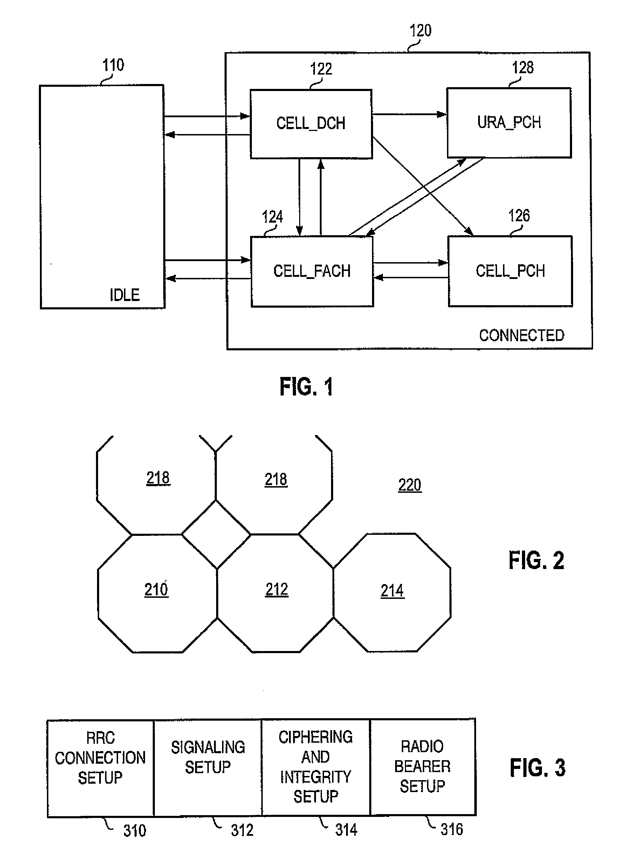

Reference is now made to **Figure 1. Figure 1** is a block diagram showing the various modes and states for the radio resource control portion of a protocol stack in a UMTS network. In particular, the RRC can be either in an RRC idle state **110** or an RRC connected state **120.**

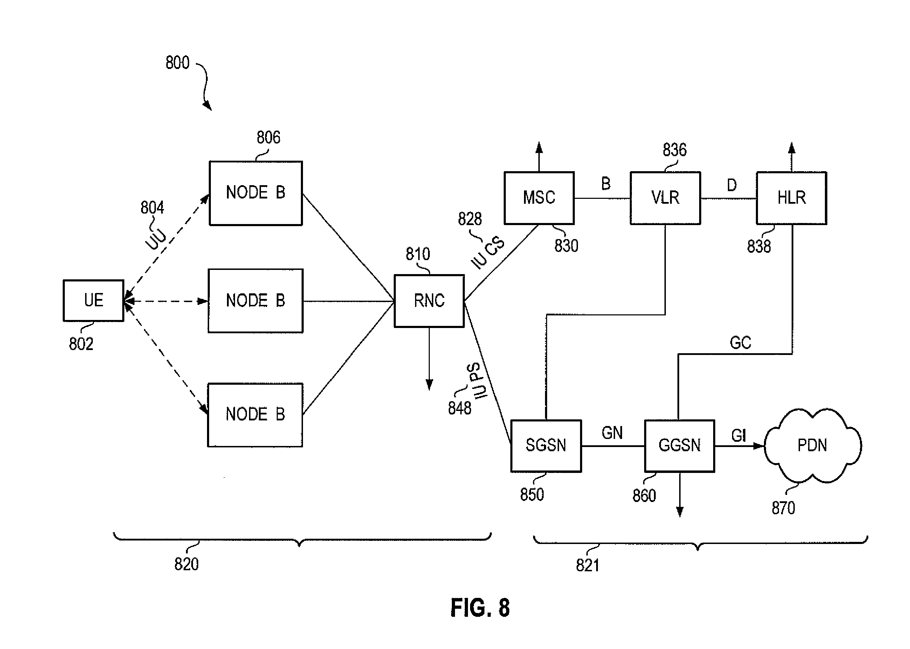

As will be appreciated by those skilled in the art, a UMTS network consists of two land-based network segments. These are the Core Network (CN) and the Universal Terrestrial Radio-Access Network (UTRAN) (as illustrated in **Figure 8****).** The Core Network is responsible for the switching and routing of data calls and data connections to the external networks while the UTRAN handles all radio related functionalities.

In idle mode **110,** the UE must request an RRC connection to set up the radio resource whenever data needs to be exchanged between the UE and the network. This can be as a result of either an application on the UE requiring a connection to send data, or as a result of the UE monitoring a paging channel to indicate whether the UTRAN or SGSN has paged the UE to receive data from an external data network such as a push server. In addition, UE also requests RRC connection whenever it needs to send Mobility Management signaling messages such as Location Area Update.

Once the UE has sent a request to the UTRAN to establish a radio connection, the UTRAN chooses a state for the RRC connection to be in. Specifically, the RRC connected mode **120** includes four separate states. These are CELL_DCH state **122,** CELL_FACH state **124,** CELL_PCH state **126** and URA_PCH state **128.**

From idle mode **110** the RRC connected state can either go to the Cell Dedicated Channel (CELL_DCH) state **122** or the Cell Forward Access Channel (CELL_FACH) state **124.**

In CELL_DCH state **122,** a dedicated channel is allocated to the UE for both uplink and downlink to exchange data. This state, since it has a dedicated physical channel allocated to the UE, typically requires the most battery power from the UE.

Alternatively, the UTRAN can move from idle mode **110** to a CELL_FACH state **124.** In a CELL_FACH state no dedicated channel is allocated to the UE. Instead, common channels are used to send signaling in a small amount of bursty data. However, the UE still has to continuously monitor the FACH, and therefore it consumes battery power.

Within the RRC connected mode **120,** the RRC state can be changed at the discretion of the UTRAN. Specifically, if data inactivity is detected for a specific amount of time or data throughput below a certain threshold is detected, the UTRAN may move the RRC state from CELL_DCH state **122** to the CELL_FACH state **124,** CELL_PCH state **126** or URA_PCH state **128.** Similarly, if the payload is detected to be above a certain threshold then the RRC state can be moved from CELL_FACH **124** to CELL_DCH **122.**

From CELL_FACH state **124,** if data inactivity is detected for predetermined time in some networks, the UTRAN can move the RRC state from CELL_FACH state **124** to a paging channel (PCH) state. This can be either the CELL_PCH state **126** or URA_PCH state **128.**

From CELL_PCH state **126** or URA_PCH state **128** the UE must move to CELL_FACH state **124** in order to initiate an update procedure to request a dedicated channel. This is the only state transition that the UE controls.

CELL_PCH state **126** and URA_PCH state **128** use a discontinuous reception cycle (DRX) to monitor broadcast messages and pages by a Paging Indicator Channel (PICH). No uplink activity is possible.

The difference between CELL_PCH state **126** and URA_PCH state **128** is that the URA_PCH state only triggers a URA Update procedure if the UEs current UTRAN registration area (URA) is not among the list of URA identities present in the current cell. Specifically, reference is made to **Figure 2. Figure 2** shows an illustration of various UMTS cells **210, 212** and **214.** All of these cells require a cell update procedure if reselected to a CELL_PCH state. However, in a UTRAN registration area, each will be within the same UTRAN registration area **220,** and thus a URA update procedure is not triggered when moving between **210, 212** and **214** when in a URA_PCH mode.

As seen in **Figure 2****,** other cells **218** are outside the URA **220,** and can be part of a separate URA or no URA.

As will be appreciated by those skilled in the art, from a battery life perspective the idle state provides the lowest battery usage compared with the states above. Specifically, because the UE is required to monitor the paging channel only at intervals, the radio does not need to continuously be on, but will instead wake up periodically. The trade-off for this is the latency to send data. However, if this latency is not too great, the advantages of being in the idle mode and saving battery power outweigh the disadvantages of the connection latency.

Reference is again made to **Figure 1****.** Various UMTS infrastructure vendors move between states **122, 124, 126** and **128** based on various criteria. Exemplary infrastructures are outlined below.

In a first exemplary infrastructure, the RRC moves between an idle mode and a Cell_DCH state directly. In the Cell_DCH state, if two seconds of inactivity are detected, the RRC state changes to a Cell_FACH state **124.** If, in Cell_FACH state **124,** ten seconds of inactivity are detected then the RRC state changes to PCH state **126.** Forty five minutes of inactivity in Cell_PCH states **126** will result in the RRC state moving back to idle mode **110.**

In a second exemplary infrastructure, RRC transition can occur between an idle mode **110** and connected mode **120** depending on a payload threshold. In the second infrastructure, if the payload is below a certain threshold then the UTRAN moves the RRC state to CELL_FACH state **124.** Conversely, if the data is above a certain payload threshold then the UTRAN moves the RRC state a CELL_DCH state **122.** In the second infrastructure, if two minutes of inactivity are detected in CELL_DCH state **122,** the UTRAN moves the RRC state to CELL_FACH state **124.** After five minutes of inactivity in the CELL-FACH state **124,** the UTRAN moves the RRC stage to CELL_PCH state **126.** In CELL_PCH state **126,** two hours of inactivity are required before moving back to idle mode **110.**

In a third exemplary infrastructure, movement between idle mode and connected mode **120** is always to CELL_DCH state **122.** After five seconds of inactivity in CELL_DCH state **122** the UTRAN moves the RRC state to CELL_FACH state **124.** Thirty seconds of inactivity in CELL_FACH state **124** results in the movement back to idle mode **110.**

In a fourth exemplary infrastructure the RRC transitions from an idle mode to a connected mode directly into a CELL_DCH state **122.** In the fourth exemplary infrastructure, CELL_DCH state **122** includes two sub-states. The first includes a sub-state which has a high data rate and a second sub-state includes a lower data rate, but still within the CELL_DCH state. In the fourth exemplary infrastructure, the RRC transitions from idle mode **110** directly into the high data rate CELL_DCH sub-state. After 10 seconds of inactivity the RRC state transitions to a low data rate CELL_DCH state. Seventeen seconds of inactivity from the low data CELL_DCH state **122** result in the RRC state changing it to idle mode **110.**

The above four exemplary infrastructure shows how various UMTS infrastructure vendors are implementing the states. As will be appreciated by those skilled in the art, in each case, if the time spent on exchanging actual data (such as an email) is significantly short compared to the time that is required to stay in the CELL_DCH or the CELL_FACH states, this causes unnecessary current drain which makes user experience in newer generation networks such as UMTS worse than in prior generation networks such as GPRS.

Further, although the CELL_PCH state is more optimal than the CELL_FACH state from a battery life perspective, the DRX cycle in a CELL_PCH state is typically set to a lower value than the idle mode **110.** As a result, the UE is required to wake up more frequently in the CELL_PCH state than in an idle mode.

The URA_PCH state with a DRX cycle similar to that of the idle state is likely the optimal trade up between battery life and latency for connection. However, URA_PCH is currently not supported in the UTRAN. It is therefore desirable to quickly transition to the idle mode as quickly as possible after an application is finished with the data exchange from a battery life perspective.

Reference is now made to **Figure 3****.** When transitioning from an idle mode to a connected mode various signaling and data connections need to be made. Referring to **Figure 3****,** the first item needing to be performed is an RRC connection set-up. As indicated above, this RRC connection setup can only be torn down by the UTRAN.

Once RRC connection setup **310** is accomplished, a signaling connection setup **312** is started.

Once signaling setup **312** is finished, a ciphering and integrity setup **314** is started. Upon completion of this, a radio bearer setup **316** is accomplished. At this point, data can be exchanged between the UE and UTRAN.

Tearing down a connection is similarly accomplished in the reverse order, in general. The radio bearer setup **316** is taken down and then the RRC connection setup **310** is taken down. At this point, the RRC moves into idle mode **110** as illustrated in **Figure 1****.**

Although the current 3GPP specification does not allow the UE to release the RRC connection or indicate its preference for RRC state, the UE can still indicate termination of a signaling connection for a specified core network domain such as the Packet Switched (PS) domain used by packet-switched applications. According to section 8.1.14.1 of 3GPP TS 25.331; the signaling connection release indication procedure is used by the UE to indicate to the UTRAN that one of its signaling connections has been released. This procedure may in turn initiate the RRC connection release procedure.

Thus staying within the current 3GPP specifications, signaling connection release may be initiated upon the tearing down of the signaling connection setup **312.** It is within the ability of the UE to tear down signaling connection setup **312,** and this in turn according to the specification "may" initiate the RRC connection release.

As will be appreciated by those skilled in the art, if signaling connection setup **312** is torn down, the UTRAN will also need to clean up deciphering and integrity setup **312** radio bearer setup **316** after the signaling connection setup **312** has been torn down.

If signaling connections setup **312** is torn down, the RRC connection setup is typically brought down by the network for current vendor infrastructures.

Using the above, if the UE determines that it is done with the exchange of data, for example if a "RRC connection manager" component of the UE software is provided with an indication that the exchange of data is complete, then the RRC connection manager may determine whether or not to tear down the signaling connection setup **312.** For example, an email application on the device sends an indication that it has received an acknowledgement from the push email server that the email was indeed received by the push server. The RRC manager can keep track of all existing applications, associated PDP contexts, associated PS radio bearers and associated circuit switched (CS) radio bearers. A delay in this case can be introduced to ensure that the application is truly finished with data exchange and no longer requires an RRC connection even after it has sent the "done" indication. This delay is equivalent to inactivity timeout associated with the application. Each application can have its own inactivity timeout. For example, an email application can have an inactivity timeout of five seconds, whereas an active browser application can have a timeout of sixty seconds. Based on a composite status of all such indications from active applications, the UE software decides how long it should wait before it can initiate a signaling connection release of the appropriate core network (e.g. PS Domain).

The inactivity timeout can be made dynamic based on a traffic pattern history and/or application profile.

Whenever the RRC connection manager determines with some probability that no application is expecting the exchange of data, it can send a signaling connection release indication procedure for the appropriate domain.

The above UE initiated transition to idle mode can happen in any stage of the RRC connected mode **120** as illustrated in **Figure 1** and ends up having the network release the RRC connection and moving to a idle mode **110** as illustrated in **Figure 1****.** This is also applicable when the UE is performing any packet data services during a voice call. In this case only the PS domain is released, but the CS domain remains connected.

A problem from the network perspective for the above is that the signaling release indication sent by the UE is interpreted as an alarm. In the case where the signaling network release is a result of an explicit action by the UE due to an application timer expiring and thus no further expectation of data, the alarm caused by the above indication skews performance and alarm indications. Key performance indicators might be altered by this, leading to a loss of efficiency.

Preferably, a cause could be added to the signaling connection release indication indicating to the UTRAN the reason for the indication. In a preferred embodiment, the cause could be an indication that an abnormal state caused the indication or that the indication was initiated by the UE as a result of a requested idle transition. Other normal (i.e. non-abnormal) transactions could also result in the sending of the signaling connection release indication.

In a further preferred embodiment, various timeouts can cause a signaling connection indication to be sent for an abnormal condition. The examples of timers below is not exhaustive, and other timers or abnormal conditions are possible. For example, 10.2.47 3GPP TS 24.008 specifies timer T3310 as:

**TIMER T3310**

| **TIMER NUM.** | **TIMER VALUE** | **STATE** | **CAUSE OF START** | **NORMAL STOP** | **ON THE 1^{st}, 2^{nd}, 3^{rd}, 4^{th} EXPIRY Note 3** |
|---|---|---|---|---|---|
| T3310 | 15s | GMM-REG-INIT | ATTACH REQ sent | ATTACH ACCEPT receive ATTACH REJECT received | Retransmission of ATTACH REQ |

This timer is used to indicate an attachment failure. The failure to attach could be a result of the network or could be a radio frequency (RF) problem such as a collision or bad RF.

The attachment attempt could occur multiple times, and an attachment failure results from either a predetermined number of failures or an explicit rejection.

A second timer of 10.2.47 of 3GPP is timer T3330, which is specified as:

**TIMER T3330**

| **TIMER NUM.** | **TIMER VALUE** | **STATE** | **CAUSE OF START** | **NORMAL STOP** | **ON THE 1^{st}, 2^{nd}, 3^{rd}, 4^{th} EXPIRY Note 3** |
|---|---|---|---|---|---|
| T3330 | 15s | GMM-ROUTING-UPDATING - INITIATED | ROUTING AREA UPDATE REQUEST sent | ROUTING AREA UPDATE ACC received | Retransmission of the ROUTING AREA UPDATE REQUEST message |
| | | | | ROUTING AREA UPDATE REJ received | |

This timer is used to indicate a routing area update failure. Upon expiry of the timer, a further routing area update could be requested multiple times and a routing area update failure results from either a predetermined number of failures or an explicit rejection.

A third timer of 10.2.47 of 3GPP is timer T3340, which is specified as:

| **TIMER NUM.** | **TIMER VALUE** | **STATE** | **CAUSE OF START** | **NORMAL STOP** | **ON THE 1^{st}, 2^{nd}, 3^{rd}, 4^{th} EXPIRY Note 3** |
|---|---|---|---|---|---|
| T3340 (Iu mode only) | 10s | GMM- REG-INIT | ATTACH REJ, DETACH REQ, ROUTING AREA UPDATE REJ or SERVICE REJ with any of the causes #11, #12, #13 or #15 | PS signalling connection released | Release the PS signalling connection and proceed as described in subclause 4.7.1.9 |
| | | GMM-DEREG-INIT | | | |
| | | GMM-RA-UPDATING-INT | | | |
| | | GMM-SERV-REQ-INIT (Iu mode only) | | | |
| | | GMM-ATTEMPTING-TO-UPDATE-MM | ATTACH ACCEPT or ROUTING AREA UPDATE ACCEPT is received with "no follow-on proceed" indication. | | |
| | | GMM-REG- NORMAL-SERVICE | | | |

### TIMER T3340

This timer is used to indicate a GMM service request failure. Upon expiry of the timer, a further GMM service request could be initiated multiple times and a GMM service request failure results from either a predetermined number of failures or an explicit rejection.

Thus, instead of a signaling release indication cause limited to an abnormal condition and a release by the UE, the signaling release indication cause could further include information about which timer failed for an abnormal condition. A signaling connection release indication could be structured as:

**SIGNALING CONNECTION RELEASE INDICATION**

| **Information Element/ Group name** | **Need** | **Multi** | **IE type and reference** | **Semantics description** |
|---|---|---|---|---|
| Message Type | MP | | Message type | |
| **UE Information Elements** | | | | |
| Integrity check info | CH | | Integrity check info 10.3.3.16 | |
| **CN information elements** | | | | |
| CN domain identity | MP | | CN domain identity 10.3.1.1 | |
| Signaling Release Indication Cause | OP | | Signaling Release Indication Cause | t3310 timeout, t3330 timeout, t3340 timeout, UE Requested Idle Transition |

This message is used by the UE to indicate to the UTRAN the release of an existing signaling connection. The addition of the signaling release indication cause allows the UTRAN or other network element to receive the cause of the signaling release indication, whether it was due to an abnormal condition, and what the abnormal condition was. And, an RRC connection release procedure is, in turn, permitted to be initiated.

In one implementation, the UE, upon receiving a request to release, or abort, a signaling connection from upper layers for a specific CN (core network) domain initiate the signaling connection release indication procedure if a signaling connection as identified in a variable, e.g., a variable ESTABLISHED_SIGNALING_CONNECTIONS, for the specific CN domain identified with the IE (information element) "CN domain identity" exists. If the variable does not identify any existing signaling connection, any ongoing establishment of signaling connection for that specific CN domain is aborted in another manner. And, upon initiation of the signaling connection release indication procedures in the Cell_PCH or URA_PCH states, the UE performs a cell update procedure using a cause "uplink data transmission". And, when a cell update procedure is completed successfully, the UE continues with the signaling connection release indication procedures that follow.

Namely, the UE sets the IE "CN domain identity" to the value indicated by upper logical layers. The value of the IE indicates the CN domain whose associated signaling connection the associated signaling connection that the upper layers are indicating to be released. If the CN domain identity is set to the PS domain, and if the upper layer indicates the cause to initiate this request, then the IE "signaling release indication cause" is accordingly set. The UE further removes the signaling connection with the identity indicated by upper layers from the variable "established_signaling_connections". And, the UE transmits a signaling connection release indication message on, e.g., the DCCH using AM RLC. Upon confirmation of successful delivery of the release indication message by the RLC, the procedure ends.

An IE "Signaling Release Indication Cause is also used pursuant to an embodiment of the present disclosure. The release cause is aligned, for instance, with existing message definitions. The upper layer release cause message is structured, e.g., as:

| **Information Element/Group name** | **Need** | **Multi** | **IE type and reference** | **Semantics description** |
|---|---|---|---|---|
| Signaling Release Indication Cause | MP | | Enumerated (UE Requested PS Data session end, T3310 expiry, T3330 expiry, T3340 expiry) | |

In this example, the T3310, T330, and T3340 expiries correspond to expiration of correspondingly-numbered timers identified previously. A cause value is settable, in one implementation, as a "UE Requested PS Data session end" rather than a "UE Requested idle transition" to provide for the UTRAN to decide upon the state transition, although the expected result corresponds to that identified by the cause value. The extension to the signaling connection release indication is preferably, but not necessarily, a non-critical extension.

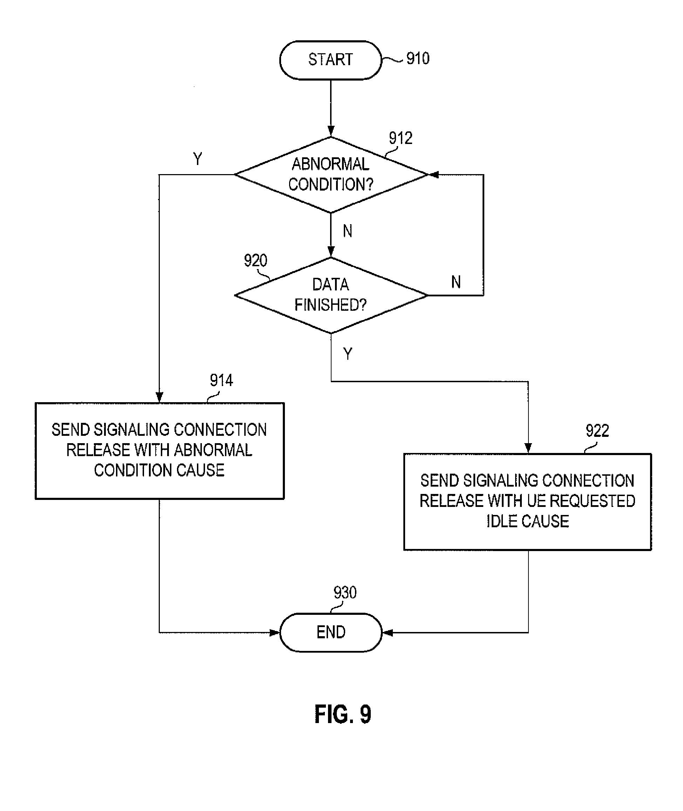

Reference is now made to **Figure 9. Figure 9** is a flow chart of an exemplary UE monitoring whether or not to send a signaling connection release indication for various domains (e.g. PS or CS). The process starts in step **910.**

The UE transitions to step **912** in which it checks to see whether an abnormal condition exists. Such an abnormal condition can include, for example, timer T3310, timer T3320, or timer T3340 expiring as described above. If these timers expire a certain predetermined number of times or if an explicit rejection is received based on the expiry of any of these timers, the UE proceeds to step **914** in which is sends a signaling connection release indication. The signaling connection release indication message is appended with a signaling release indication cause field. The signaling release indication cause field includes at least that the signaling release indication is based on an abnormal condition or state and a preferred embodiment includes the specific timer that timed out to result in the abnormal condition.

Conversely, if in steps **912** the UE finds that no abnormal condition exists, the UE proceeds to step **920** in which it checks whether further data is expected at the UE. This can, as described above, include when an email is sent and confirmation of the sending of the email is received back at the UE. Other examples of where the UE will determine that no further data is expected would be known to those skilled in the art.

If in step **920** the UE determines that the data transfer is finished (or in the case of a circuit switched domain that a call is finished) the UE proceeds to step **922** in which it sends a signaling connection release indication in which the signaling release indication cause field has been added and includes the fact that the UE requested an idle transition.

From step **920,** if the data is not finished the UE loops back and continues to check whether an abnormal condition exists in step **912** and whether the data is finished in step **920.**

Once the signaling connection release indication is sent in step **914** or step **922,** the process proceeds to step **930** and ends.

The UE includes functional elements, implementable, for instance, by applications or algorithms carried out through operation of a UE microprocessor or by hardware implementation, that form a checker and a signaling connection release indication sender. The checker is configured to check whether a signaling connection release indication should be sent. And, a signaling connection release indication sender is configured to send a signaling connection release indication responsive to indication by the checker that the signaling connection release indication should be sent. The signaling connection release indication includes a signaling release indication cause field.

In one implementation, the network is, instead, implicitly made aware of timing out of a timer, and the UE need not send a cause value indicating the timing out of the timer. That is to say, the timer starts timing upon authorization of the network. Cause codes are defined, and the cause codes are provided by the network to the UE. Such cause codes are used by the UE to initiate the timer. And, the network is implicitly aware of the reason for subsequent timing out of the timer as the cause code earlier sent by the network causes the timer to time. And, as a result, the UE need not send a cause value indicating the timing out of the timer.

As suggested by **Figure 9** as well as the foregoing description, a cause is includable and sent together with, a signaling connection release to indicate: 1.) an abnormal condition as well as 2.) a normal condition (not an abnormal condition such as for example a request for a PS data session end and/or a transition to an idle mode)). In various implementations, therefore, operations at the UE provides for the adding of the cause to the signaling connection release to indicate an abnormal condition, or, alternately, to indicate request of an idle transition or of a PS data session end, i.e., normal operation. Such operation, of course, also includes UE operation in which a cause is added to the signaling connection release only when an indication of an abnormal condition is to be made. And, conversely, such operation also includes UE operation in which a cause is added to a signaling connection release only to indicate normal, i.e., non-abnormal, operations and transactions. That is to say, with respect to **Figure 9****,** in such alternate, included operation, if, at step **912,** an abnormal condition exists, the yes branch is taken to the step **914** while, if an abnormal condition does not exist, then the UE proceeds directly to the end step **930.** Conversely, in the other such alternate, included operation, subsequent to the start step **912** a path is taken directly to the data finished step **920.** If the data is finished, the yes branch is taken to the step **920** and, thereafter, to the step **930.** If the data is not finished at the step **920,** the no branch is taken back to the same step, i.e., step **920.**

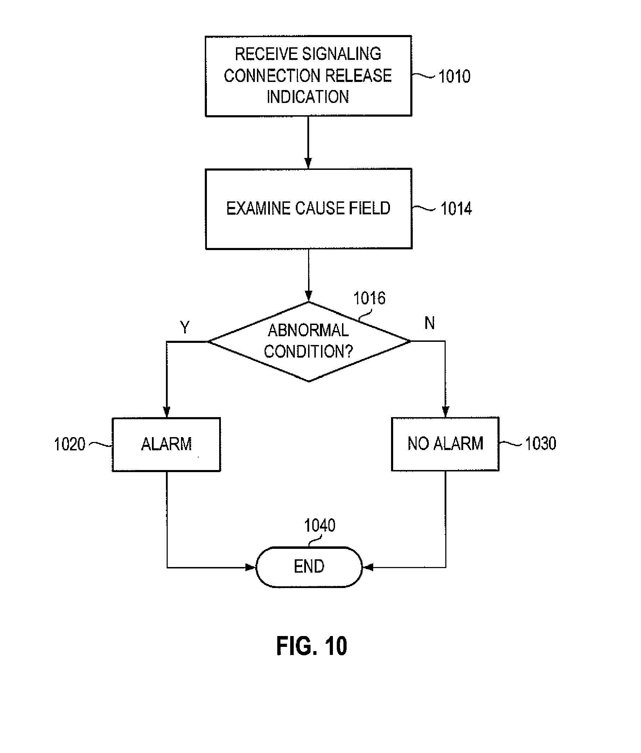

Referring to **Figure 10****,** when a network element receives the signaling connection release indication in step **1010** the network element examines the signaling release indication cause field in step **1014** if present and in step **1016** checks whether the cause is an abnormal cause or whether it is due to the UE requesting a PS data session end and/or an idle transition. If in step **1016** the signaling connection release indication is of abnormal cause, the network node proceeds to step **1020** in which an alarm is noted for performance monitoring and alarm monitoring purposes. The key performance indicator can be updated appropriately.

Conversely, if in step **1016** the signaling connection release indication is not a result of an abnormal condition, or in other words is a result of the UE requesting a PS data session end and/or an idle transition, the network node proceeds to step **1030** in which no alarm is raised and the indication can be filtered from the performance statistics, thereby preventing the performance statistics from being skewed. From step **1020** or step **1030,** the network node proceeds to step **1040** in which the process ends.

As suggested above, in some implementations, the absence of a cause in a signaling connection release indication may also be used to determine whether the signaling connection release indication is a result of a normal or an abnormal condition and whether an alarm must be raised. For example, if a cause is added only to denote normal conditions (ie. non-abnormal such as for e.g. a request for PS data session end and/or transition to idle mode), and the network element receives a signaling connection release indication with no cause added, the network element may infer from the absence of a cause that the signaling connection release indication is a result of an abnormal condition and raise an alarm. Conversely, in another example, if a cause is added only to denote abnormal conditions, and the network element receives a signaling connection release indication with no cause, the network element may infer from the absence of a cause that the signaling connection release indication is a result of a normal condition (e.g. request for PS data session end and/or transition to idle mode) and not raise an alarm.

The reception and examination of the signaling release indication cause field if present is followed with initiation by the network element of an RRC connection release procedure. And, the packet switched data connection ends.

As will be appreciated by those skilled in the art, step **1020** can be used to further distinguish between various alarm conditions. For example, a T3310 time out could be used to keep a first set of statistics and a T3330 time out could be used to keep a second set of statistics. Step **1020** can distinguish between the causes of the abnormal condition, thereby allowing the network operator to track performance more efficiently.

The network includes functional elements, implementable, for instance, by applications or algorithms carried out through operation of a processor or by hardware implementation, that form an examiner and an alarm generator. The examiner is configured to examine a signaling release indication cause field of the signaling connection release indication. The examiner checks whether the signaling release indication cause field indicates an abnormal condition. The alarm generator is configured selectably to generate an alarm if examination by the examiner determines the signal release indication cause field indicates the abnormal condition. In addition, the network element may further include an initiator to initiate or cause the release of signaling connection(s).

In one implementation, upon reception of the signaling connection release indication, the UTRAN forwards the cause that is received and requests, from upper layers, for release of the signaling connection. The upper layers then are able to initiate the release of the signaling connection. The IE signaling release indication cause indicates the UE's upper layer cause to trigger the RRC of the UE to send the message. The cause is possibly the result of an abnormal upper layer procedure. Differentiation of the cause of the message is assured through successful reception of the IE.

A possible scenario includes a scenario in which, prior to confirmation, by the RLC, of successful delivery of the signaling connection release indication message, reestablishment of the transmitting side of the RLC entity on the signaling radio bearer RB2 occurs. In the event of such an occurrence, the UE retransmits the signaling connection release indication message, e.g., on the uplink DCCH using AM RLC on signaling radio bearer RB2. In the event that an enter-RAT handover from performance of a UTRAN procedure occurs prior to successful delivery of confirmation, by the RLC, of the successful delivery of the signaling connection release indication message, the UE aborts the signaling connection while in the new RAT.

Referring again to **Figure 1****,** in some cases it may be more desirable to be in the connected mode state URA_PCH than in idle mode. For example, if the latency for connection to the CELL_DCH or the CELL_FACH connected mode states is required to be lower, it is preferable to be in a connected mode PCH state. There are two ways of accomplishing this. First is by changing the 3 GPP specifications to allow for the UE to request the UTRAN move it to a specific state, in this case the URA_PCH state **128.**

Alternatively, the RRC connection manager may take into account other factors such as what state the RRC connection is currently in. If, for example, the RRC connection is in the URA_PCH state it may decide that it is unnecessary to move to idle mode **110** and thus no Signaling connection release procedure is initiated.

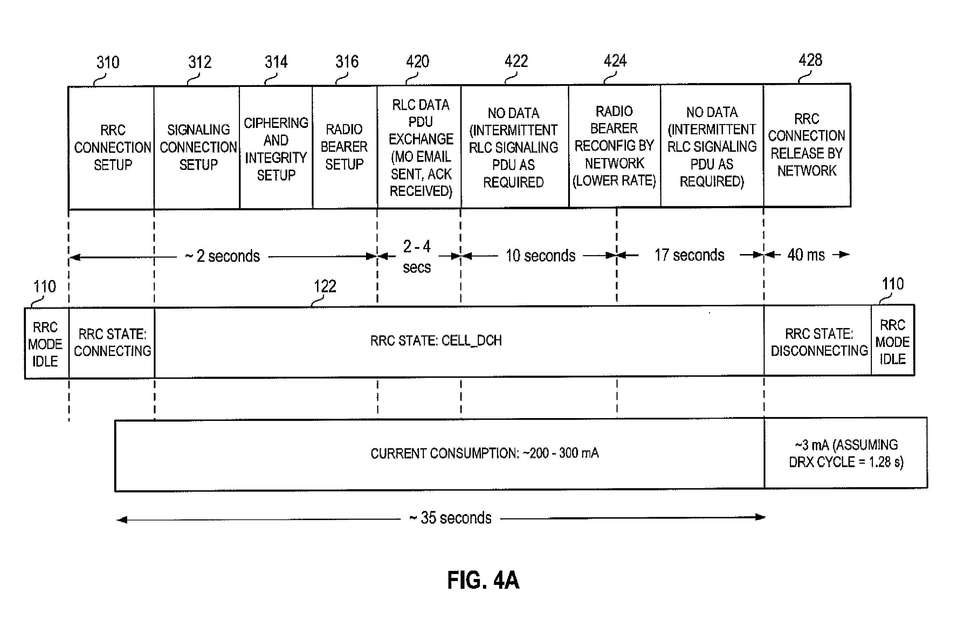

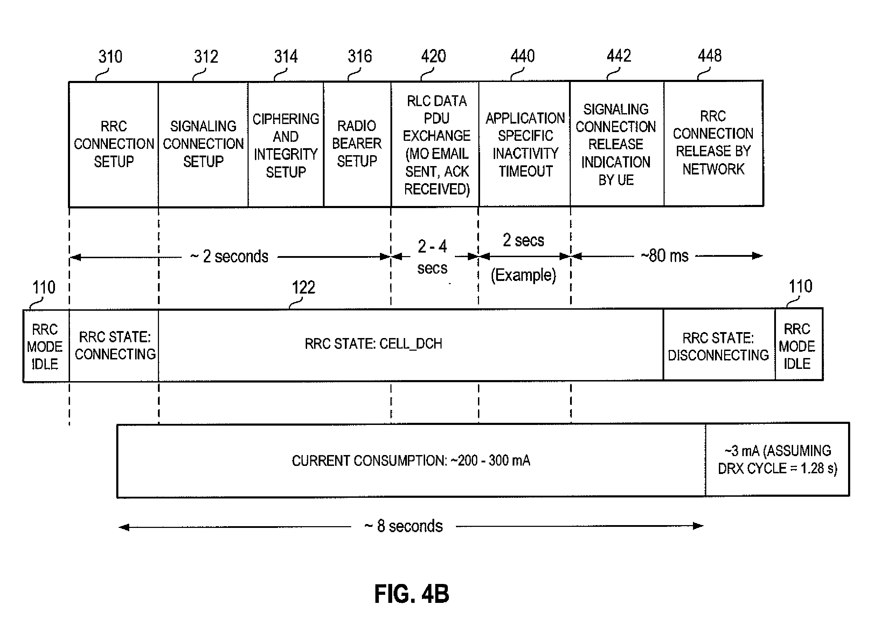

Reference is made to **Figure 4****.** **Figure 4A** shows a current UMTS implementation according to the infrastructure "four" example above. As illustrated in **Figure 4****,** time is across the horizontal axes.

The UE starts in RRC idle state **110** and based on local data needing to be transmitted or a page received from the UTRAN, starts to establish an RRC connection.

As illustrated in **Figure 4A****,** RRC connection setup **310** occurs first, and the RRC state is a connecting state **410** during this time.

Next, signaling connections setup **312,** ciphering an integrity setup **314,** and radio bearer setup **316** occurs. The RRC state is CELL_DCH state **122** during this. As illustrated in **Figure 4A****,** the time for moving from RRC idle to the time that the radio bearer is setup is approximately two seconds in this example.

Data is next exchanged. In the example **Figure 4A** this is achieved in about two to four seconds and is illustrated by step **420.**

After data is exchanged in step **420,** no data is being exchanged except for intermittent RLC signaling PDU as required and thus the radio bearer is reconfigured by the network to move into a lower data rate DCH state after approximately ten seconds. This is illustrated in steps **422** and **424.**

In the lower data rate DCH state nothing is received for seventeen seconds, at which point the RRC connection is released by the network in step 428.

Once the RRC connection is initiated in step **428,** the RRC state proceeds to a disconnecting state **430** for approximately forty milliseconds, after which the UE is in a RRC idle state **110.**

Also illustrated in **Figure 4A****,** the UE current consumption is illustrated for the period in which the RRC is in CELL_DCH state **122.** As seen, the current consumption is approximately 200 to 300 milliamps for the entire duration of the CELL_DCH state. During disconnect and idle, about 3 milliamps are utilized, assuming a DRX cycle of 1.28 seconds. However, the 35 seconds of current consumption at 200 to 300 milliamps is draining on the battery.

Reference is now made to **Figure 4B. Figure 4B** utilizes the same exemplary infrastructure "four" from above, only now implementing the signaling connection release

As illustrated in **Figure 4B****,** the same setup steps **310, 312, 314** and **316** occur and this takes the same amount of time when moving between RRC idle state **110** and RRC CELL_DCH state **122.**

Further, the RRC data PDU exchange for the exemplary email of Figure 4A is also done at **Figure 4B** and this takes approximately two to four seconds.

The UE in the example of **Figure 4B** has an application specific inactivity timeout, which in the example of **Figure 4B** is two seconds and is illustrated by step **440.** After the RRC connection manager has determined that there is inactivity for the specific amount of time, the UE releases the signaling connection setup in step **442** and the RRC connection is released by the network in step **428.**

As illustrated in **Figure 4B****,** the current consumption during the CELL_DCH step **122** is still about 200 to 300 milliamps. However, the connection time is only about eight seconds. As will appreciated by those skilled in the art, the considerably shorter amount of time that the mobile stays in the cell DCH state **122** results in significant battery savings for an always on UE device.

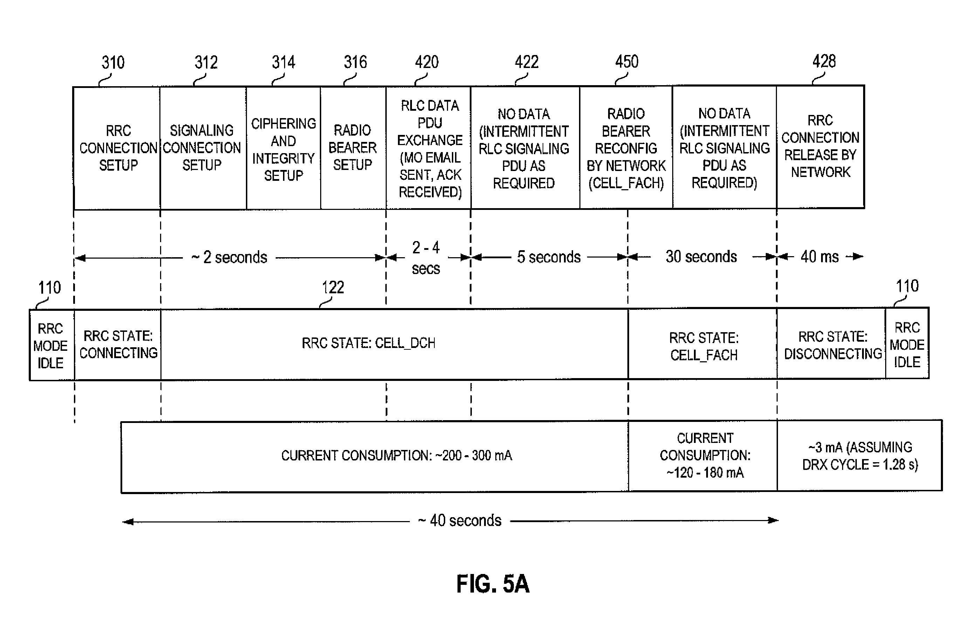

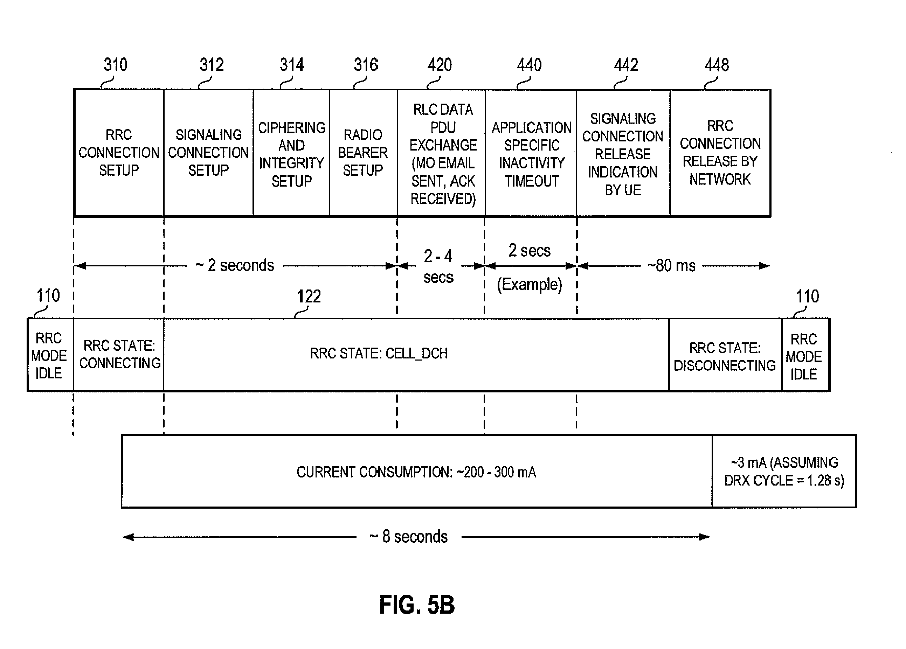

Reference is now made to **Figure 5. Figure 5** shows a second example using the infrastructure indicated above as Infrastructure "three". As with **Figures 4A** and **4B****,** a connection setup occurs which takes approximately two seconds. This requires the RRC connection setup **310,** the signaling connection setup **312,** the ciphering and integrity setup **314** and the radio bearer setup **316.**

During this setup, the UE moves from RRC idle mode **110** to a CELL_DCH state **122** with a RRC state connecting step **410** in between.

As with **Figure 4A****,** in **Figure 5A** RLC data PDU exchange occurs, and in the example of **Figure 5A** takes two to four seconds.

According to the infrastructure three, RLC signaling PDU exchange receives no data and thus is idle for period of five seconds in step **422,** except for intermittent RLC signaling PDU as required, at which point the radio bearer reconfigures the network to move into a CELL_FACH state **124** from CELL_DCH state **122.** This is done in step **450.**

In the CELL_FACH state **124,** the RLC signaling PDU exchange finds that there is no data except for intermittent RLC signaling PDU as required for a predetermined amount of time, in this case thirty seconds, at which point a RRC connection release by network is performed in step **428.**

As seen in **Figure 5A****,** this moves the RRC state to idle mode **110.**

As further seen in **Figure 5A****,** the current consumption during the DCH mode is between 200 and 300 milliamps. When moving into CELL_FACH state **124** the current consumption lowers to approximately 120 to 180 milliamps. After the RRC connector is released and the RRC moves into idle mode **110** the power consumption is approximately 3 milliamps.

The UTRA RRC Connected Mode state being CELL_DCH state **122** or CELL_FACH state **124** lasts for approximately forty seconds in the example of **Figure 5A****.**

Reference is now made to **Figure 5B. Figure 5B** illustrates the same infrastructure "three" as Figure 5A with the same connection time of about two seconds to get the RRC connection setup **310,** signaling connection setup **312,** ciphering integrity setup **314** and radio bearer setup **316.** Further, RLC data PDU exchange **420** take approximately two to four seconds.

As with **Figure 4B****,** a UE application detects a specific inactivity timeout in step **440,** at which point the Signaling connection release indication procedure is initiated by the UE and as a consequence the RRC connection is released by the network in step **448.**

As can be seen further in **Figure 5B****,** the RRC starts in a idle mode **110,** moves to a CELL_DCH state **122** without proceeding into the CELL_FACH state.

As will be seen further in **Figure 5B****,** current consumption is approximately 200 to 300 milliamps in the time that the RRC stage is in CELL_DCH state **122** which according to the example of **Figure 5** is approximate eight seconds.

Therefore, a comparison between **Figures 4A** and **4B****,** and **Figures 5A** and **5B** shows that a significant amount of current consumption is eliminated, thereby extending the battery life of the UE significantly. As will be appreciated by those skilled in the art, the above can further be used in the context of current 3GPP specs.

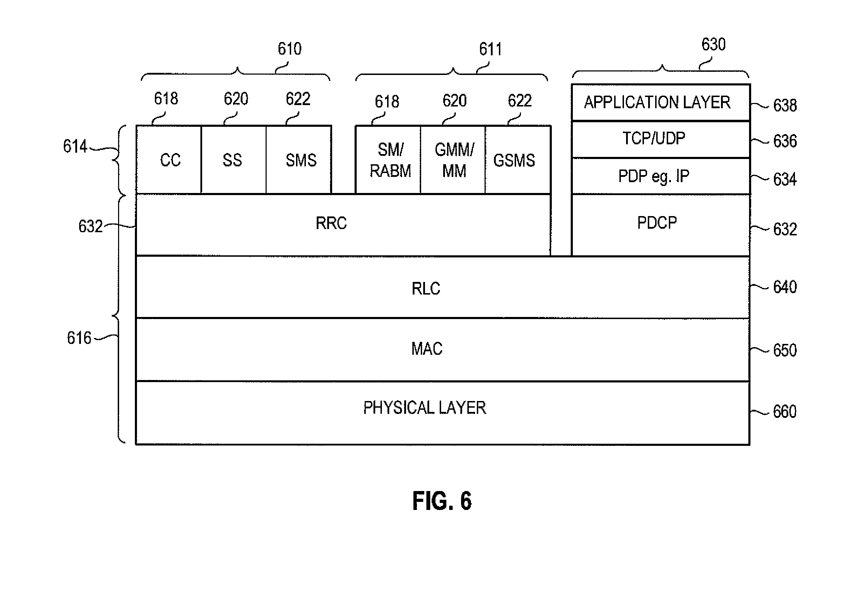

Reference is now made to **Figure 6. Figure 6** illustrates a protocol stack for a UMTS network.

As seen in **Figure 6****,** the UMTS includes a CS control plane **610,** PS control plane **611,** and PS user plane **630**

Within these three planes, a non-access stratum (NAS) portion **614** and an access stratum portion **616** exist.

NAS portion **614** in CS control plane **610** includes a call control (CC) **618,** supplementary services (SS) **620,** and short message service (SMS) **622.**

NAS portion **614** in PS control plane **611** includes both mobility management (MM) and GPRS mobility management (GMM) **626.** It further includes SM/RABM **624** and GSMS **628.**

CC **618** provides for call management signaling for circuit switched services. The session management portion of SM/RABM **624** provides for PDP context activation, deactivation and modification. SM/RABM **624** also provides for quality of service negotiation.

The main function of the RABM portion of the SM/RABM **624** is to connect a PDP context to a Radio Access Bearer. Thus SM/RABM **624** is responsible for the setup, modification and release of radio bearers.

CS control plane **610** and PS control plane **611,** in the access stratum 616 sit on radio resource control (RRC) **617.**

NAS portion **614** in PS user plane **630** includes an application layer **638,** TCP/UDP layer **636,** and PDP layer **634.** PDP layer **634** can, for example, include internet protocol (IP).

Access Stratum **616,** in PS user plane **630** includes packet data convergence protocol (PDCP) **632.** PDCP **632** is designed to make the WCDMA protocol suitable to carry TCP/IP protocol between UE and RNC (as seen in **Figure 8****),** and is optionally for IP traffic stream protocol header compression and decompression.

The UMTS Radio Link Control (RLC) **640** and Medium Access Control (MAC) layers **650** form the data link sub-layers of the UMTS radio interface and reside on the RNC node and the User Equipment.

The Layer 1 (L1) UMTS layer (physical layer **650)** is below the RLC/MAC layers **640** and **650.** This layer is the physical layer for communications.

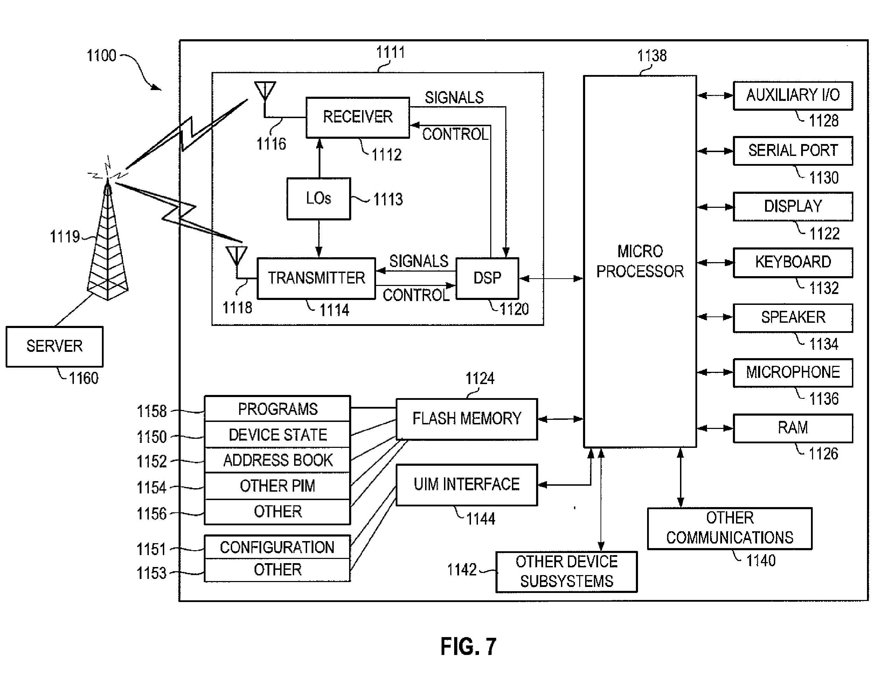

While the above can be implemented on a variety of mobile devices, an example of one mobile device is outlined below with respect to **Figure 7****.** Reference is now made to **Figure 7****.**

UE **1100** is preferably a two-way wireless communication device having at least voice and data communication capabilities. UE **1100** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where UE **1100** is enabled for two-way communication, it will incorporate a communication subsystem **1111,** including both a receiver **1112** and a transmitter **1114,** as well as associated components such as one or more, preferably embedded or internal, antenna elements **1116** and **1118,** local oscillators (LOs) **1113,** and a processing module such as a digital signal processor (DSP) **1120.** As will be apparent to those skilled in the field of communications, the particular design of the communication subsystem **1111** will be dependent upon the communication network in which the device is intended to operate. For example, UE **1100** may include a communication subsystem **1111** designed to operate within the GPRS network or UMTS network.

Network access requirements will also vary depending upon the type of network **1119.** For example, In UMTS and GPRS networks, network access is associated with a subscriber or user of UE **1100.** For example, a GPRS mobile device therefore requires a subscriber identity module (SIM) card in order to operate on a GPRS network. In UMTS a USIM or SIM module is required. In CDMA a RUIM card or module is required. These will be referred to as a UIM interface herein. Without a valid UIM interface, a mobile device may not be fully functional. Local or non-network communication functions, as well as legally required functions (if any) such as emergency calling, may be available, but mobile device **1100** will be unable to carry out any other functions involving communications over the network **1100.** The UIM interface **1144** is normally similar to a card-slot into which a card can be inserted and ejected like a diskette or PCMCIA card. The UIM card can have approximately 64K of memory and hold many key configuration **1151,** and other information **1153** such as identification, and subscriber related information.

When required network registration or activation procedures have been completed, UE **1100** may send and receive communication signals over the network **1119.** Signals received by antenna **1116** through communication network **1119** are input to receiver **1112,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **1120.** In a similar manner, signals to be transmitted are processed, including modulation and encoding for example, by DSP **1120** and input to transmitter **1114** for digital to analog conversion, frequency up conversion, filtering, amplification and transmission over the communication network **1119** via antenna **1118.** DSP **1120** not only processes communication signals, but also provides for receiver and transmitter control. For example, the gains applied to communication signals in receiver **1112** and transmitter **1114** may be adaptively controlled through automatic gain control algorithms implemented in DSP **1120.**

Network **1119** may further communicate with multiple systems, including a server **1160** and other elements (not shown). For example, network **1119** may communicate with both an enterprise system and a web client system in order to accommodate various clients with various service levels.

UE **1100** preferably includes a microprocessor **1138** which controls the overall operation of the device. Communication functions, including at least data communications, are performed through communication subsystem **1111.** Microprocessor **1138** also interacts with further device subsystems such as the display **1122,** flash memory **1124,** random access memory (RAM) **1126,** auxiliary input/output (I/O) subsystems **1128,** serial port **1130,** keyboard **1132,** speaker **1134,** microphone **1136,** a short-range communications subsystem **1140** and any other device subsystems generally designated as **1142.**

Some of the subsystems shown in **Figure 7** perform communication-related functions, whereas other subsystems may provide "resident" or on-device functions. Notably, some subsystems, such as keyboard **1132** and display **1122,** for example, may be used for both communication-related functions, such as entering a text message for transmission over a communication network, and device-resident functions such as a calculator or task list.

Operating system software used by the microprocessor **1138** is preferably stored in a persistent store such as flash memory **1124,** which may instead be a read-only memory (ROM) or similar storage element (not shown). Those skilled in the art will appreciate that the operating system, specific device applications, or parts thereof, may be temporarily loaded into a volatile memory such as RAM **1126.** Received communication signals may also be stored in RAM **1126.** Further, a unique identifier is also preferably stored in read-only memory.

As shown, flash memory **1124** can be segregated into different areas for both computer programs **1158** and program data storage **1150, 1152, 1154** and **1156.** These different storage types indicate that each program can allocate a portion of flash memory **1124** for their own data storage requirements. Microprocessor **1138,** in addition to its operating system functions, preferably enables execution of software applications on the mobile device. A predetermined set of applications that control basic operations, including at least data and voice communication applications for example, will normally be installed on UE **1100** during manufacturing. A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **1119.** In a preferred embodiment, the PIM data items are seamlessly integrated, synchronized and updated, via the wireless network **1119,** with the mobile device user's corresponding data items stored or associated with a host computer system. Further applications may also be loaded onto the mobile device **1100** through the network **1119,** an auxiliary I/O subsystem **1128,** serial port **1130,** short-range communications subsystem **1140** or any other suitable subsystem **1142,** and installed by a user in the RAM **1126** or preferably a non-volatile store (not shown) for execution by the microprocessor **1138.** Such flexibility in application installation increases the functionality of the device and may provide enhanced on-device functions, communication-related functions, or both. For example, secure communication applications may enable electronic commerce functions and other such financial transactions to be performed using the UE **1100.** These applications will however, according to the above, in many cases need to be approved by a carrier.

In a data communication mode, a received signal such as a text message or web page download will be processed by the communication subsystem **1111** and input to the microprocessor **1138,** which preferably further processes the received signal for output to the display **1122,** or alternatively to an auxiliary I/O device **1128.** A user of UE **1100** may also compose data items such as email messages for example, using the keyboard **1132,** which is preferably a complete alphanumeric keyboard or telephone-type keypad, in conjunction with the display **1122** and possibly an auxiliary I/O device **1128.** Such composed items may then be transmitted over a communication network through the communication subsystem **1111.**

For voice communications, overall operation of UE **1100** is similar, except that received signals would preferably be output to a speaker **1134** and signals for transmission would be generated by a microphone **1136.** Alternative voice or audio I/O subsystems, such as a voice message recording subsystem, may also be implemented on UE **1100.** Although voice or audio signal output is preferably accomplished primarily through the speaker **1134,** display **1122** may also be used to provide an indication of the identity of a calling party, the duration of a voice call, or other voice call related information for example.

Serial port **1130** in **Figure 7** would normally be implemented in a personal digital assistant (PDA)-type mobile device for which synchronization with a user's desktop computer (not shown) may be desirable. Such a port **1130** would enable a user to set preferences through an external device or software application and would extend the capabilities of mobile device **1100** by providing for information or software downloads to UE **1100** other than through a wireless communication network. The alternate download path may for example be used to load an encryption key onto the device through a direct and thus reliable and trusted connection to thereby enable secure device communication.

Alternatively, serial port **1130** could be used for other communications, and could include as a universal serial bus (USB) port. An interface is associated with serial port **1130.**

Other communications subsystems **1140,** such as a short-range communications subsystem, is a further optional component which may provide for communication between UE **1100** and different systems or devices, which need not necessarily be similar devices. For example, the subsystem **1140** may include an infrared device and associated circuits and components or a Bluetooth™ communication module to provide for communication with similarly enabled systems and devices.

Reference is now made to **Figure 8. Figure 8** is a block diagram of a communication system **800** which includes a UE **802** which communicates through a wireless communication network.

UE **802** communicates wirelessly with one of multiple Node Bs **806.** Each Node B **806** is responsible for air interface processing and some radio resource management functions. Node B **806** provides functionality similar to a Base Transceiver Station in a GSM/GPRS networks.

The wireless link shown in communication system **800** of **Figure 8** represents one or more different channels, typically different radio frequency (RF) channels, and associated protocols used between the wireless network and UE **802.** A Uu air interface **804** is used between UE **802** and Node B **806.**

An RF channel is a limited resource that must be conserved, typically due to limits in overall bandwidth and a limited battery power of UE **802.** Those skilled in art will appreciate that a wireless network in actual practice may include hundreds of cells depending upon desired overall expanse of network coverage. All pertinent components may be connected by multiple switches and routers (not shown), controlled by multiple network controllers.

Each Node B **806** communicates with a radio network controller (RNC) **810.** The RNC **810** is responsible for control of the radio resources in its area. One RNC **810** control multiple Node Bs **806.**

The RNC **810** in UMTS networks provides functions equivalent to the Base Station Controller (BSC) functions in GSM/GPRS networks. However, an RNC **810** includes more intelligence including, for example, autonomous handovers management without involving MSCs and SGSNs.

The interface used between Node B **806** and RNC **810** is an Iub interface **808.** An NBAP (Node B application part) signaling protocol is primarily used, as defined in 3GPP TS 25.433 V3.11.0 (2002-09) and 3GPP TS 25.433 V5.7.0 (2004-01).

Universal Terrestrial Radio Access Network (UTRAN) **820** comprises the RNC **810,** Node B **806** and the Uu air interface **804.**

Circuit switched traffic is routed to Mobile Switching Centre (MSC) **830.** MSC **830** is the computer that places the calls, and takes and receives data from the subscriber or from PSTN (not shown).

Traffic between RNC **810** and MSC **830** uses the Iu-CS interface **828.** Iu-CS interface **828** is the circuit-switched connection for carrying (typically) voice traffic and signaling between UTRAN **820** and the core voice network. The main signaling protocol used is RANAP (Radio Access Network Application Part). The RANAP protocol is used in UMTS signaling between the Core Network **821,** which can be a MSC **830** or SSGN **850** (defined in more detail below) and UTRAN **820.** RANAP protocol is defined in 3GPP TS 25.413 V3.11.1 (2002-09) and TS 25.413 V5.7.0 (2004-01).

For all UEs **802** registered with a network operator, permanent data (such as UE **102** user's profile) as well as temporary data (such as UE's **802** current location) are stored in a home location registry (HLR) **838.** In case of a voice call to UE **802,** HLR **838** is queried to determine the current location of UE **802.** A Visitor Location Register (VLR) **836** of MSC **830** is responsible for a group of location areas and stores the data of those mobile stations that are currently in its area of responsibility. This includes parts of the permanent mobile station data that have been transmitted from HLR **838** to the VLR **836** for faster access. However, the VLR **836** of MSC **830** may also assign and store local data, such as temporary identifications. UE **802** is also authenticated on system access by HLR **838.**

Packet data is routed through Service GPRS Support Node (SGSN) **850.** SGSN **850** is the gateway between the RNC and the core network in a GPRS/UMTS network and is responsible for the delivery of data packets from and to the UEs within its geographical service area. Iu-PS interface **848** is used between the RNC **810** and SGSN **850,** and is the packet-switched connection for carrying (typically) data traffic and signaling between the UTRAN **820** and the core data network. The main signaling protocol used is RANAP (described above).

The SSGN **850** communicates with the Gateway GPRS Support Node (GGSN) **860.** GGSN **860** is the interface between the UMTS/GPRS network and other networks such as the Internet or private networks. GGSN 860 is connected to a public data network PDN **870** over a Gi interface.

Those skilled in art will appreciate that wireless network may be connected to other systems, possibly including other networks, not explicitly shown in **Figure 8****.** A network will normally be transmitting at very least some sort of paging and system information on an ongoing basis, even if there is no actual packet data exchanged. Although the network consists of many parts, these parts all work together to result in certain behaviours at the wireless link.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

In a first alternative embodiment there is provided a method for processing signaling connection release indication between user equipment and a wireless network, comprising the steps of: a) monitoring, at the user equipment, whether a signaling connection release indication should be sent to the wireless network; b) appending, at the user equipment, a cause for the signaling connection release indication to the signaling connection release indication; c) sending the appended signaling connection release indication to which the cause is appended to the wireless network, thereby to indicate the release of a signaling connection and to identify the cause of the signaling connection release indication; d) receiving the signaling connection release indication at the wireless network; and e) examining said cause at the wireless network to determine whether the signaling connection release indication is a result of a normal or an abnormal condition.

Optionally, the cause is indicative of an abnormal condition.

Optionally, the cause is indicative of the expiry of a timer.

Optionally, the timer is selected from the group consisting of an attachment failure timer, a routing area update timer and a GMM service request timer.

Optionally, the cause is a request by the user equipment to end a PS data session.

Optionally, the examining step raises an alarm when said cause is indicative of an abnormal condition.

Optionally, the cause is indicative of a normal condition.

Optionally, the method further comprises raising an alarm at the wireless network if the signaling connection release indication is a result of an abnormal condition.

Optionally, said step of appending is only performed if an abnormal condition exists.

Optionally, said step of appending is performed only if a normal condition exists.

In a second alternative embodiment there is provided a system adapted for processing signaling release indication cause, the system comprising: a) user equipment, the user equipment having a radio subsystem including a radio adapted to communicate with a network; a radio processor having a digital signal processor and adapted to interact with said radio subsystem; memory; a user interface; a processor adapted to run user applications and interact with the memory, the radio and the user interface and adapted to run applications, the user equipment characterized by having means for: i. monitoring whether a signaling connection release indication should be sent to the wireless network; ii. appending a cause for the signaling connection release indication to the signaling connection release indication; and iii. sending the appended signaling connection release indication to which the cause is appended to the wireless network, thereby to indicate the release of a signaling connection and to identify the cause of the signaling connection release indication; and b) a wireless network adapted to communicate with the user equipment and further characterized by means for: i. receiving the signaling connection release indication; and ii. examining said cause to determine whether the signaling connection release indication is a result of a normal or an abnormal condition.

Optionally, the cause is indicative of an abnormal condition.

Optionally, the cause is indicative of the expiry of a timer.

Optionally, the timer is selected from the group consisting of an attachment failure timer, a routing area update timer and a GMM service request timer.

Optionally, the cause comprises a request by the user equipment to end a PS data session.

Optionally, the means for examining is adapted to raise an alarm when said cause is indicative of an abnormal condition.

Optionally, the system further comprises an alarm generator for raising an alarm if the signaling connection release indication is a result of an abnormal condition.

Optionally, the means for appending is adapted to append the cause only if an abnormal condition exists.

Optionally, the means for appending is adapted to append the cause only if a normal condition exists.

In a third alternative embodiment there is provided a method for processing signaling connection release at a user equipment, comprising the steps of:
a) monitoring whether a signaling connection release indication should be sent to the wireless network; b) appending a cause for the signaling connection release indication to the signaling connection release indication; and c) sending the appended signaling connection release indication to which the cause is appended, thereby to indicate the release of a signaling connection and to identify the cause of the signaling connection release indication.

Optionally, the cause is indicative of an abnormal condition.

Optionally, the cause is indicative of the expiry of a timer.

Optionally, the timer is selected from the group consisting of an attachment failure timer, a routing area update timer and a GMM service request timer.

Optionally, the cause is indicative of a request by the user equipment to end a PS data session.

Optionally, the cause is indicative of a normal condition.

Optionally, the step of appending is only performed if an abnormal condition exists.

Optionally, the step of appending is only performed if a normal condition exists.

Optionally, monitoring whether a signaling connection release indication should be sent to the wireless network comprises receiving from an upper layer a request to release a signaling connection for a Core Network (CN) domain.

Optionally, the step of appending a cause for the signaling connection release indication is only performed if the CN domain is a Packet Switched (PS) domain.

In a fourth alternative embodiment there is provided a user equipment adapted for providing signaling release indication cause in a network, the user equipment having a radio subsystem including a radio adapted to communicate with the network; a radio processor having a digital signal processor and adapted to interact with said radio subsystem; memory; a user interface; a processor adapted to run user applications and interact with the memory, the radio and the user interface and adapted to run applications, the user equipment characterized by having means for: a) monitoring whether a signaling connection release indication should be sent to the wireless network; b) appending a cause for the signaling connection release indication to the signaling connection release indication; and c) sending the appended signaling connection release indication that includes the cause, thereby to indicate the release of a signaling connection and to identify the cause of the signaling connection release indication.

In a fifth alternative embodiment there is provided apparatus for user equipment to facilitate release of signaling connection, said apparatus comprising: a) a checker configured to check whether a signaling connection release indication should be sent; and b) a signaling connection release indication sender configured to send a signaling connection release indication responsive to said check by said checker that the signaling connection release indication should be sent, the signaling connection release indication including a signaling connection release indication cause field that indicates an abnormal condition.

Optionally, said checker is further configured to check whether, subsequent to sending of the signaling connection release indication and prior to confirmation of delivery of the signaling connection release indication, signaling connection of the user equipment is needed.

Optionally, said signaling connection release indication sender is further configured to retransmit the signaling connection release indication.

In a sixth alternative embodiment there is provided network apparatus for operating upon a signaling connection release indication, said network apparatus comprising: a) an examiner configured to examine a signaling connection release indication cause field of the signaling connection release indication to check whether the signaling connection release indication is a result of a normal or an abnormal condition; and b) an initiator configured to initiate a connection release.

Optionally, the network apparatus includes logical layers, wherein said examiner is embodied at a first of the logical layers, said examiner further configured to request, to a second of the logical layers, the signaling connection release.

In a seventh alternative embodiment there is provided a method for processing a signaling connection release in a wireless network, comprising the steps of: a) receiving from a user equipment a signaling connection release indication being indicative of a signaling connection to release and of a cause for the signaling connection release indication; b) causing the release of the signaling connection based on the signaling connection release indication received; and c) based on the signaling connection release indication cause received, causing a determination of whether the signaling connection release indication is a result of a normal or an abnormal condition.

Optionally, the receiving and causing steps are implemented in a Universal Terrestrial Radio Access Network (UTRAN).

Optionally, causing the release of the signaling connection release indication received comprises requesting at the UTRAN the release of the signaling connection from an upper layer in the wireless network.

Optionally, causing a determination of whether the signaling connection release indication is a result of a normal or an abnormal condition comprises forwarding at the UTRAN the signaling connection release indication cause received to an upper layer in the wireless network.

In an eighth alternative embodiment there is provided a method for processing a signalling connection release indication at a user equipment, the method: determining whether a signalling connection release indication message should be sent to the wireless network; if an abnormal condition exists at the user equipment, appending a cause for the signalling connection release indication to the signalling connection release indication; and sending the signalling connection release indication message to the wireless network.

Optionally, the cause is indicative of an abnormal condition.

Optionally, the cause is indicative of the expiry of a timer.

Optionally, the timer is selected from the group consisting of an attachment failure timer, a routing area update timer and a GMM service request timer.

Optionally, appending the cause is only performed if an abnormal condition exists.

Optionally, determining whether a signaling connection release indication message should be sent to the wireless network comprises receiving from an upper layer a request to release a signaling connection for a Core Network (CN) domain.

Optionally, the step of appending a cause for the signaling connection release indication is only performed if the CN domain is a Packet Switched (PS) domain.

In a ninth alternative embodiment there is provided a method for processing a signalling connection release indication in a wireless network, the method: receiving from a user equipment a signalling connection release indication message, being indicative of a signalling connection to release and of a cause for the signalling connection release indication; causing the release of the signalling connection based upon the signalling connection release indication received; and based on the signalling connection release indication cause received, causing a determination that the signalling connection release indication is a result of an abnormal condition.

Optionally, the steps of receiving a signalling connection release indication message and causing the release of the signalling are implemented in a Universal Terrestrial Radio Access Network (UTRAN).

Optionally, causing the release of the signaling connection comprises requesting at the UTRAN the release of the signaling connection from an upper layer in the wireless network.

Optionally, causing a determination that the signaling connection release indication is a result of an abnormal condition comprises forwarding at the UTRAN the signaling connection release indication cause received to an upper layer in the wireless network.

In a tenth alternative embodiment there is provided a user equipment adapted for providing signalling release indication cause in a network, the user equipment having a radio subsystem including a radio adapted to communicate with the network; a radio processor having a digital signal processor and adapted to interact with said radio subsystem; memory; a user interface; a processor adapted to run user applications and interact with the memory, the radio and the user interface and adapted to run applications, the user equipment having means for: determining whether a signalling connection release indication should be sent to the wireless network; if an abnormal condition exists at the user equipment, appending a cause for the signalling connection release indication to the signalling connection release indication; and sending the signalling connection release indication to the wireless network.

In an eleventh alternative embodiment there is provided network apparatus for processing a signalling connection release indication, said network apparatus having means for: receiving from a user equipment a signalling connection release indication message, being indicative of a signalling connection to release and of a cause for the signalling connection release indication; causing the release of the signalling connection based upon the signalling connection release indication received; and based on the signalling connection release indication cause received, causing a determination that the signalling connection release indication is a result of an abnormal condition.

## Claims

1. A method for processing an indication message at a user equipment (1100), the method **characterized by**:
setting, at the user equipment (1100), a cause of the indication message only if, at the user equipment, an abnormal condition exists; and
sending, from the user equipment (1100), the indication message to a wireless network.

2. The method of claim 1, wherein the indication message is a signalling connection release indication message.

3. The method of any of the preceding claims, further comprising determining (912), at the user equipment, that the indication message should be sent to the wireless network.

4. The method of any of claim 3, wherein determining (912) that a signaling connection release indication message should be sent comprises receiving from an upper layer a request to release a signaling connection for a Core Network (CN) domain.

5. The method of any of the preceding claims, wherein the cause is indicative of an abnormal condition.

6. The method of any of the preceding claims, wherein the cause is indicative of the expiry of a timer.

7. The method of claim 6, wherein the timer is selected from the group consisting of an attachment failure timer, a routing area update timer and a GMM service request timer.

8. The method of any of the preceding claims, wherein sending (914) the indication message comprises transmitting the signaling connection release indication message on DCCH using AM RLC.

9. The method of any of the preceding claims, wherein the cause is indicative of a request by the user equipment (1100) to transition to an idle state or mode.

10. The method of any of the preceding claims, wherein the wireless network is a UMTS Terrestrial Radio Access Network, UTRAN.

11. The method of any of the preceding claims, wherein the cause is an Information Element, IE, of the indication message.

12. The method of any of the preceding claims, further comprising sending the indication message without a cause if, at the user equipment (1100), no further data is expected.

13. The method of any of the preceding claims, further comprising receiving a state transition message from the wireless network in response to the indication message.

14. The method of any of the preceding claims, further comprising receiving an RRC Connection Release message from the wireless network in response to the indication message.

15. The method of claim 13, further comprising transitioning to a battery-efficient state in response to the received state transition message.

16. The method of claim 14, further comprising transitioning to an idle mode in response to the received RRC Connection Release message.

17. A user equipment (1100) adapted for processing an indication message, the user equipment having a radio subsystem (1111); a processor adapted to interact with a memory (1124; 1126), the radio subsystem (1111) and a user interface, the user equipment **characterized by** means for carrying out the method of any of the preceding claims.

18. A method for processing an indication message at a wireless network (1119), the method **characterized by**:
receiving (1010) from a user equipment an indication message to which a cause is appended;
initiating a state transition for a signalling connection based on the indication cause; and
based on the indication cause of the indication message, determining that the indication message was sent as a result of an abnormal condition.

19. The method of claim 18, wherein the indication message is a signalling connection release indication message.

20. The method of any of claims 18 to 19, wherein the state transition is a network controlled state transition.

21. The method of any of claims 18 to 20, further comprising upon receiving the indication message from the user equipment, requesting at the wireless network the release of the signaling connection from an upper layer in the wireless network.

22. The method of any of claims 18 to 21, wherein determining that the indication message was sent as a result of an abnormal condition comprises forwarding, at the wireless network, the indication cause received to an upper layer in the wireless network.

23. The method of any of claims 18 to 22, wherein the cause is an Information Element, IE, of the indication message.

24. The method of any of claims 18 to 23, wherein the cause is indicative of a request by the user equipment (1100) to transition to an idle state or mode.

25. The method of any of claims 18 to 24, wherein the indication message is transmitted on DCCH using AM RLC.

26. The method of any of claims 18 to 25, wherein the steps of receiving an indication message and initiating a state transition are implemented in a UMTS Terrestrial Radio Access Network, UTRAN.

27. A wireless network apparatus (1119) for processing an indication message, said network apparatus (1119) **characterized by** means for carrying out the method of any of claims 18 to 26.
